# EUROPÄISCHE PATENTANMELDUNG

(11) **EP 3 450 808 A1**
(43) Veröffentlichungstag der Anmeldung: **06.03.2019**
(21) Anmeldenummer: 18190151.3
(22) Anmeldetag: 22.08.2018
(51) Int. Cl.: F16K 1/52

(54) **ENTNAHMEVORRICHTUNG FÜR FLÜSSIGPRODUKTE AUS EINER ROHRLEITUNG**

(30) Priorität: 31.08.2017 DE 202017105241 U
(71) Anmelder: DMK Deutsches Milchkontor GmbH, 27404 Zeven (DE)
(72) Erfinder: STADLER, Christian, 27404 Zeven (DE)
(74) Vertreter: Fabry, Bernd

(57) **Zusammenfassung**

Vorgeschlagen wird ein Entnahmeventil (A) für Flüssigkeiten aus einer Rohrleitung umfassend
(a) eine Probennahmelaterne (9) in Verbindung mit einem Probennahmegehäuse (8),
(b) einen Verschlusskolben welcher innerhalb der Probennahmelaterne (9) axial beweglich ist und in seinem unteren Bereich einen axial angeordneten Anschlag (10) aufweist, sowie
(c) eine Kontaktscheibe (21), die im unteren Bereich der Probennahmelaterne (9) angeordnet ist, und dabei eine Öffnung aufweist, die dem Durchmesser des Verschlusskolbens entspricht, jedoch kleiner als der Durchmesser des auf dem Verschlusskolben angeordneten Sperrrings ist,
welches sich dadurch auszeichnet, dass die Stärke des Anschlags (10) und damit der Bewegungsspielraum des Verschlusskolbens in der Probennahmelaterne (9) durch Hinzufügen oder Weglassen von Distanzstücken einstellbar ist und der Ventilteller (15) eine Teflondichtung (7) aufweist.

## Beschreibung

### PRIORITÄTSANGABE

Die vorliegende Patentanmeldung nimmt die Priorität des Deutschen Gebrauchsmusters
202017 105 241.9
vom 31. August 2017 in Anspruch.

### GEBIET DER ERFINDUNG

Die Erfindung befindet sich auf dem Gebiet der Verfahrenstechnik, speziell der Milchherstellung und betrifft ein speziell ausgerüstetes Entnahmeventil.

### HINTERGRUND DER ERFINDUNG

Zur Qualitätssicherung von flüssigen Roh- und Halbfabrikaten, wie beispielsweise Milch, die durch Rohrleitungen gefördert werden und dabei durch Rückstände, Anbackungen, Schmutzpartikel und dergleichen verunreinigt werden können, ist es erforderlich, regelmäßig Proben zu entnehmen und zu analysieren.

Die im Markt befindlichen Entnahmevorrichtungen sind den Problemen in der Milchwirtschaft bezüglich der Geometrie zwar angepasst, erweisen sich aber gegenüber hoher Luftfeuchtigkeit und sauren Reinigungsmittel als nicht beständig, so dass es zu häufigen Stillständen wegen Reparaturen und Austauscharbeiten kommt.

Die Anmelderin hat sich daher nach anderen Ventilen umgesehen, die sich unter den Produktionsbedingungen in der Milchindustrie als zuverlässig und beständig erweisen und hat dabei Probennahmeventile vom Typ VARINLINE® TSVN der Firma GEA Tuchenhagen GmbH als geeignet befunden.

Diese Ventile sind jedoch nicht immer verfügbar und bezüglich ihrer Geometrie von Nachteil, da sie nur die Entnahme von großen Probenmengen erlauben, was für einfache analytische Untersuchungen nicht erforderlich ist. Ferner wurde beobachtet, dass sich der Hub und damit die Probenmenge in Abhängigkeit von Produkt und Temperaturen um bis zu 400 % veränderten, was für eine statistische Auswertung nicht akzeptabel ist.

### RELEVANTER STAND DER TECHNIK

Aus der DE 2303857 B2 (VETCO) ist eine Betätigungseinrichtung, insbesondere für einen Schieber, bekannt, mit einem durch Druckmittel und/oder durch von Hand zu betätigenden Antriebsmittel, die in einem Zylinder entlang der Zylinderachse beweglich ist und gegenüber dem Zylinder einen abgedichteten Kolben aufweist, welcher mit einem axialen Stößel verbunden und am oberen und am unteren Ende des Zylinders angeordneten Deckeln axial bewegbar geführt ist. Die offenbarte Betätigungseinrichtung ist zur Verwendung in einer Ölförderanlage gedacht.

Gegenstand der US 7,192,003 B2 (ASEPCO) sind aseptische Ventile und insbesondere Ventile zum Erhalten von Proben aseptischer Flüssigkeit aus einem Mischbehälter oder einem anderen sterilen Behälter. Die Ventile umfassen jeweils einen sich axial erstreckenden Ventilkörper (26); eine Innenkammer (29) mit einer Endwand (28) an einem Ende des Ventilkörpers (26); eine Einlassöffnung (32) in der Endwand (28); einen Ventilsitz (33), welcher die Einlassöffnung (32) umgibt; sowie ein Paar von Anschlüssen (39), welche sich an gegenüberliegenden Seiten des Ventilkörpers (26) in die Kammer (29) öffnen und welche sich unter spitzen Winkeln bezüglich der Achse des Ventilkörpers (26) von der Kammer (29) weg erstrecken; und ein Ventilelement (43), welches für eine Axialbewegung zwischen offenen und geschlossenen Positionen relativ zu dem Ventilsitz (33) zum Regeln/Steuern einer Verbindung zwischen der Einlassöffnung (32) und den Anschlüssen (39) innerhalb der Kammer (29) koaxial angeordnet ist. Gekennzeichnet ist die Erfindung dadurch, dass die Kammer (29) eine Seitenwand (31) mit zwei entgegengesetzt geneigten, konisch angeschrägten Abschnitten aufweist, welche im Durchmesser zunehmen und sich in Richtung des Zentrums der Kammer (29) schneiden, wobei sich die Anschlüsse (39) an dem Schnitt der Seitenwandabschnitte, wo der Durchmesser der Kammer (29) am größten ist, in die Kammer (29) öffnen.

Die US 2005 0269533 A1 (FEDEGARI) betrifft ein Ventil, das insbesondere für sanitäre Anwendungen bestimmt ist, umfassend einen Körper, in dem sich ein erster und ein zweiter senkrechter Kanal für den Strom eines abzudichtenden Fluids befinden; ein Verschlusselement wirkt in dem Ventilkörper, um den ersten Kanal zu schließen und zu öffnen. Das Schließelement besteht aus einem zentralen Kern, um den sich ein flexibler, kreisförmiger Ring erstreckt, und hat einen Kopf mit einem divergierenden Profil, das den ersten Kanal infolge der Wirkung der Betätigungsmittel schließt und öffnet.

Aus der US 2007 0114484 A1 (SBC) ist schließlich ein Ventil für den Sanitärbereich bekannt, das eine freie Entwässerung von Prozess- und Sterilisations- und Reinigungsmaterialien ermöglicht.

### AUFGABE DER ERFINDUNG

Die Aufgabe der vorliegenden hat daher darin bestanden, die aus dem Stand der Technik bekannten Ventile vom Typ VARINLINE® TSVN baulich so zu verändern, dass einstellbare und konstante Probengrößen entnommen werden können.

### BESCHREIBUNG DER ERFINDUNG

Gegenstand der Erfindung ist ein Entnahmeventil **(A)** für Flüssigkeiten aus einer Rohrleitung umfassend
(a) eine Probennahmelaterne **(9)** in Verbindung mit einem Probennahmegehäuse **(8),**
(b) einen Verschlusskolben **(17)** welcher innerhalb der Probennahmelaterne **(9)** axial beweglich ist und in seinem unteren Bereich einen axial angeordneten Anschlag **(10)** aufweist, sowie
(c) eine Kontaktscheibe **(21),** die im unteren Bereich der Probennahmelaterne **(9)** angeordnet ist, und dabei eine Öffnung aufweist, die dem Durchmesser des Verschlusskolbens **(17)** entspricht, jedoch kleiner als der Durchmesser des auf dem Verschlusskolben angeordneten Anschlags **(10)** ist,
wobei die Stärke des Sperrrings **(10)** und damit der Bewegungsspielraum des Verschlusskolbens **(17)** in der Probennahmelaterne **(9)** durch Hinzufügen oder Weglassen von Distanzstücken einstellbar ist und der Ventilteller **(15)** eine Teflondichtung **(7)** aufweist.
Durch die Modifikation des Ventiltellers mit einer Teflon-Dichtung statt einer vom Hersteller nur einbaufähigen EPDM-V-Ring wird nun auch bei unterschiedlichen Produkten und insbesondere unterschiedlichen Temperaturen gleiche und auch über längere Zeit konstante Öffnungshube erzielt.

Im Sinne der vorliegenden Erfindung enthält eine Rohrleitung, in der Flüssigkeiten, wie beispielsweise Milch transportiert werden, eine oder mehrere Entnahmestellen **(B),** die mit Hilfe jeweils eines Entnahmeventils **(A)** verschlossen sind. Der Verschluss erfolgt durch einen Kolben **(17),** der üblicherweise an seiner Spitze konisch geformt ist und durch eine Dichtung **(1)** geführt wird. Wird der Kolben **(17)** zurückgezogen, ergießt sich Flüssigkeit in ein Probennahmegehäuse **(8).** Der Kolben **(17)** bewegt sich dabei innerhalb der so genannten Probennahmelaterne **(9),** also einem Zylinder, der mit dem Probennahmegehäuse **(8)** in offenem Kontakt steht.

Üblicherweise steht der Verschlusskolben **(17)** über ein Kolbengestänge **(16)** mit einem Federmechanismus **(19),** beispielsweise einer Druckfeder, in Verbindung. Ohne Federdruck schließt der Kolben mit der Entnahmestelle ab und verhindert, dass Flüssigkeit in den Probenbehälter eintritt; wird die Feder gespannt, öffnet der Kolben die Entnahmestelle.

Die Aufwärtsbewegung des Kolbens **(17)** wird durch die Entnahmestelle **(B)** begrenzt. Das heißt, dass der Kolben ohne Federspannung gerade soweit ausgelenkt ist, dass seine Kegelspitze durch die Dichtung **(1)** der Entnahmestelle ragt und diese schließt.

Die Abwärtsbewegung wird durch den Anschlag **(10)** begrenzt, der im unteren Bereich des Verschlusskolbens **(17)** angeordnet ist. Dabei kann es sich beispielsweise um einen einfachen Vierkantring handeln, der bewirkt, dass der Verschlusskolben **(17)** unter Federdruck nur so weit zurückgezogen werden kann, bis der Anschlag gegen die Kontaktscheibe **(21)** stößt. Es können beispielsweise 1 bis 10 zusätzliche Distanzstücke mit Stärken von 0,1 bis 7 mm eingefügt werden.

Die vorliegende Erfindung löst das Problem der zu großen Probenmenge nun dadurch, dass der Anschlag **(10)** durch Distanzstücke verstärkt wird sowie der Modifikation des Ventiltellers die es ermöglicht eine Teflon-Dichtung einzusetzen. Bei diesen Distanzstücken handelt es sich im einfachsten Fall um Lochscheiben, die auf den Verschlusskolben **(17)** aufgefädelt werden und dadurch die Stärke des Anschlags **(10)** erhöhen. Durch Zahl und Stärke der Distanzstücke lässt sich regeln, wie weit der Kolben **(17)** ausgelenkt werden kann und damit, wie weit die Entnahmestelle geöffnet wird. In Kombination mit einer Programmierung der Druckluftansteuerung des Ventils kann somit eingestellt werden, wieviel Probe in das Probennahmegehäuse **(8)** fließt.

Das Ventil ist dabei so ausgestaltet, dass es sowohl mechanisch über ein Handrad betrieben oder auch elektrisch/pneumatisch gesteuert werden kann.

Die Erfindung wird an Hand der folgenden Risszeichnung eines erfindungsgemäßen Ventils näher erläutert. Dabei haben die Bezugszeichen die folgende Bedeutung:

| | |
|---|---|
| 1 | Dichtring |
| 2 | Lager |
| 3 | Dichtscheibe |
| 5 | O-Ring |
| 7 | V-Ring |
| 8 | Probennahmegehäuse |
| 9 | Probennahmelaterne |
| 10 | Anschlag - Vierkantring |
| 15 | Ventilteller |
| 16 | Kolbenstange |
| 17 | Kolben |
| 18 | Federkäfigdeckel |
| 19 | Druckfeder |
| 20 | Handrad |
| 21 | Kontaktscheibe |
| 22 | O-Ring |
| 23 | O-Ring |
| 24 | Quadring |
| 26 | Verschraubung |
| 27 | Sicherungsscheibe |
| 28 | Klappring |
| 30 | Sechskantmutter |
| 33 | Führungsring |
| 34 | Buchse |
| 35 | Entlüftungsschraube |
| A | Ventil |
| B | Verschluss |
| C | Klappring |
| D | O-Ring |
| E | Rückmeldeeinrichtung |

Die Ventile sind dabei für beliebige Rohrquerschnitte geeignet, beispielsweise von 29 x 1,5 mm bis 114,3 x 2,3 mm.

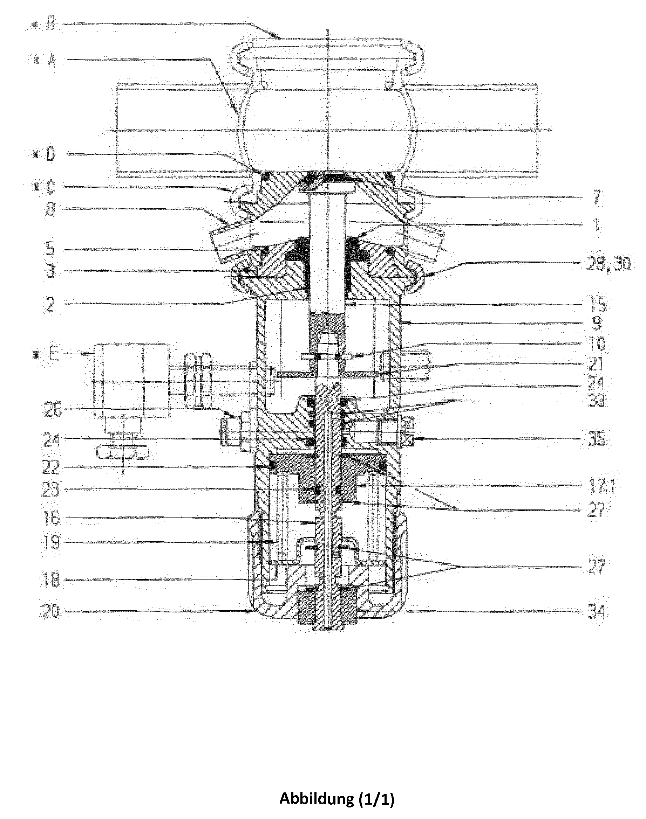

## Patentansprüche

1. Entnahmeventil **(A)** für Flüssigkeiten aus einer Rohrleitung umfassend
(a) eine Probennahmelaterne **(9)** in Verbindung mit einem Probennahmegehäuse **(8),**
(b) einen Verschlusskolben **(17)** welcher innerhalb der Probennahmelaterne **(9)** axial beweglich ist und in seinem unteren Bereich einen axial angeordneten Anschlag **(10)** aufweist, sowie
(c) eine Kontaktscheibe **(21),** die im unteren Bereich der Probennahmelaterne **(9)** angeordnet ist, und dabei eine Öffnung aufweist, die dem Durchmesser des Verschlusskolbens entspricht, jedoch kleiner als der Durchmesser des auf dem Verschlusskolben angeordneten Sperrrings ist,
**dadurch gekennzeichnet, dass** die Stärke des Anschlags **(10)** und damit der Bewegungsspielraum des Verschlusskolbens **(17)** in der Probennahmelaterne **(9)** durch Hinzufügen oder Weglassen von Distanzstücken einstellbar ist und der Ventilteller **(15)** eine Teflondichtung **(7)** aufweist.

2. Ventil nach Anspruch 1, **dadurch gekennzeichnet, dass** der Verschlusskolben **(17)** an seiner Spitze konisch geformt ist.

3. Ventil nach den Ansprüchen 1 und/oder 2, **dadurch gekennzeichnet, dass** der Verschlusskolben **(17)** über ein Kolbengestänge **(16)** mit einem Federmechanismus **(19)** in Verbindung steht.

4. Ventil nach Anspruch 3, **dadurch gekennzeichnet, dass** es sich um eine Druckluftfeder handelt.

5. Ventil nach mindestens einem der Ansprüche 1 bis 4, **dadurch gekennzeichnet, dass** der Verschlusskolben **(17)** ohne Federspannung gerade soweit ausgelenkt ist, dass seine Kegelspitze durch die Dichtung **(1)** der Entnahmestelle ragt und diese schließt.

6. Ventil nach mindestens einem der Ansprüche 1 bis 5, **dadurch gekennzeichnet, dass** der Anschlag als Vierkantring ausgebildet, der im unteren Bereich des Verschlusskolben **(17)** angeordnet ist.

7. Ventil nach mindestens einem der Ansprüche 1 bis 6, **dadurch gekennzeichnet, dass** der Anschlag durch 1 bis 10 Distanzstücke mit einer Stärke von 0,1 bis 7 mm verstärkt wird.

8. Ventil nach mindestens einem der Ansprüche 1 bis 7, **dadurch gekennzeichnet, dass** es sowohl mechanisch über ein Handrad betrieben) oder auch elektrisch gesteuert werden kann.

9. Ventil nach mindestens einem der Ansprüche 1 bis 8, **dadurch gekennzeichnet, dass** die Rohrleitungen Milchprodukte enthalten.

10. Ventil nach mindestens einem der Ansprüche 1 bis 9, **dadurch gekennzeichnet, dass** die Rohrleitungen einen Querschnitt im Bereich von 29 x 1,5 mm bis 114,3 x 2,3 mm aufweisen.
